# EUROPEAN PATENT APPLICATION

(11) **EP 4 818 658 A1**
(43) Date of publication of application: **07.10.2026**
(21) Application number: 25167621.9
(22) Date of filing: 01.04.2025
(51) Int. Cl.: G01K 1/12, H01R 4/30

(54) **METHOD IN CONNECTION WITH ELECTRICAL CONNECTION OF ELECTRICAL ASSEMBLY**

(71) Applicant: ABB Schweiz AG, 5400 Baden (CH)
(72) Inventor: Nygren, Toni, 00380 Helsinki (FI); Kärppä, Jaani, 00380 Helsinki (FI)
(74) Representative: Kolster Oy Ab

(57) **Abstract**

A method in connection with an electrical assembly, wherein the electrical assembly comprises an electrical connection having a first element (11), a second element (12) and connection arrangement (2) for keeping the first element (11) and the second element (12) in electrically conducting connection with each other, wherein the method comprises marking the electrical connection with a dye (4). The dye (4) is a thermochromatic dye adapted to undergo a visible change at a predetermined indication temperature.

## Description

### FIELD OF THE INVENTION

The present invention relates to a method in connection with an electrical connection of an electrical assembly, and more particularly to a method for detecting an excessive heating of the electrical connection.

### BACKGROUND OF THE INVENTION

Electrical assemblies such as electrical drives contain large amounts of electrical connections that are carried out with screws or bolts, for example. One drive cabinet may contain anything from tens to hundreds and multidrive lineups up to tens of thousands of electrical screw connections that are all critical for the normal operation of the drive. These connections can become loose during operation due to multiple reasons such as using wrong tightening torque, temperature cycling, creeping of materials and vibration. When the electrical connections become loose the temperature on connection surfaces begin to increase due to increased contact resistance. In the best case the increasing temperature causes tripping of the device and in the worst case it can cause a complete breakdown of the device.

In a known method electrical connections of an electrical assembly are periodically checked using thermal imaging while the electrical assembly is running.

In case connection arrangements of the electrical assembly are threaded arrangements such as bolt arrangements or screw arrangements, it is known to periodically check the threaded arrangements manually with a torque wrench.

Another known method in connection with a threaded arrangement of an electrical connection comprises, after the threaded arrangement is tightened, drawing a line with a marker pen such that the line extends from a rotatable connection member of the threaded arrangement to a stationary portion of the electrical assembly. The line is used to indicate a situation in which a rotational position of the rotatable connection member subsequently changes. In other words, the line gives a visual indication that the threaded arrangement of the electrical connection is correctly tightened and gives a visual indication in case the threaded arrangement becomes loose.

One of the problems associated with the above method involving the line is that the line is only capable of indicating the correct rotational position of the rotatable connection member, and the line will not give any indication for example in cases in which the electrical connection becomes loose due to material creeping. Further, the line is not able to indicate if the electrical connection was not properly tightened from the start.

### BRIEF DESCRIPTION OF THE INVENTION

An object of the present invention is to provide a method in connection with an electrical connection of an electrical assembly so as to solve the above problems. The objects of the invention are achieved by a method which is characterized by what is stated in the independent claim. The preferred embodiments of the invention are disclosed in the dependent claims.

The invention is based on the idea of marking an electrical connection of an electrical assembly with a thermochromatic dye adapted to undergo a visible change at a predetermined indication temperature.

An advantage of the method of the invention is that the thermochromatic dye is capable of indicating an unwanted temperature rise in all types of electrical connections.

### BRIEF DESCRIPTION OF THE DRAWINGS

In the following the invention will be described in greater detail by means of preferred embodiments with reference to the attached drawings, in which
Figure 1 shows an electrical assembly comprising three electrical connections marked with a method according to an embodiment of present invention; and
Figure 2 shows the electrical assembly of Figure 1 in a situation in which one of the electrical connections has heated to a predetermined indication temperature.

### DETAILED DESCRIPTION OF THE INVENTION

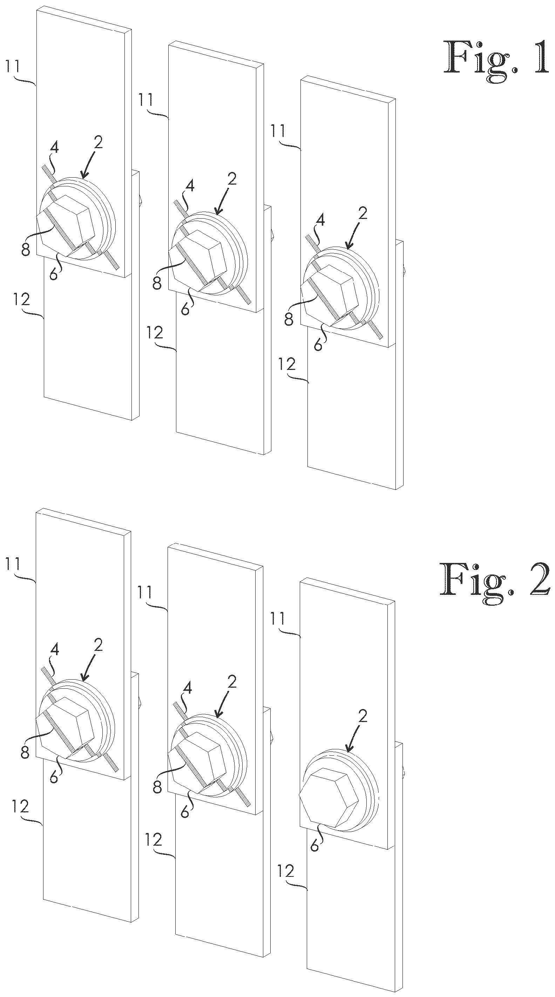

Figure 1 shows an electrical assembly comprising three electrical connections, each having a first element 11, a second element 12 and connection arrangement 2 for keeping the first element 11 and the second element 12 in electrically conducting connection with each other.

Each of the three connection arrangements 2 is a threaded arrangement, wherein the connection arrangement 2 comprises a rotatable connection member 6 and a counterpart element (not shown) adapted to co-operate with the rotatable connection member 6. In an alternative embodiment, the connection arrangement is a crimped arrangement, bayonet arrangement, welded arrangement or soldered arrangement. In a further alternative embodiment, the connection arrangement is a knife contact arrangement or a bumper contact arrangement of an electrical switch such that one of the first element and the second element is a stationary contact of the electrical switch and the other is a movable contact of the electrical switch. In a still further alternative embodiment, the connection arrangement is a knife contact arrangement of a plug-in unit equipment.

A diameter of the thread provided on the rotatable connection member 6 is greater than or equal to 5 mm.

The rotatable connection member 6 is adapted to press the first element 11 against the second element 12. The rotatable connection member 6 is a bolt having an external thread, wherein the counterpart element has an internal thread adapted to co-operate with the external thread of the bolt. In an embodiment, the counterpart element for the bolt is a nut. In an alternative embodiment, the counterpart element for the bolt is a stationary portion of the electrical assembly provided with an internal thread. Referring to Figure 1, it would be possible to provide the second elements 12 with internal threads such that the second elements 12 would be adapted to function as counterpart elements for the rotatable connection members 6. Further, it would be possible to provide a frame of the electrical assembly with internal threads such that the frame would be adapted to function as counterpart elements for the rotatable connection members. In a further alternative embodiment, the rotatable connection member is a screw or nut.

In an embodiment in which the electrical assembly comprises a frame, one of the first element and second element of the electrical connection is stationary relative to the frame regardless of a state of the connection arrangement. For example, the first element is a cable terminal of a cable adapted to be connected to an electrical apparatus of the electrical assembly, and the second element is a stationary terminal of the electrical apparatus.

Each of the three electrical connections of Figure 1 has been marked with a dye 4. The dye 4 is a thermochromatic dye adapted to undergo a visible change at a predetermined indication temperature.

In Figure 1, the marking extends from the first element 11 to the rotatable connection member 6. In an alternative embodiment, the marking is made on at least one of the first element, the second element and the connection arrangement.

In an embodiment, the marking is made on a portion of the electrical connection which is in view in an operational state of the electrical connection. Referring to Figure 1, the electrical connections are in their operational states and the markings are in view without detaching the rotatable connection members 6.

The predetermined indication temperature of the dye 4 is in a range of +70 °C to +155 °C. In another embodiment, the predetermined indication temperature is in a range of +100 °C to +130 °C.

The dye 4 is a permanent type of dye. Herein, the permanent type of dye is a dye that is resistant to dry-erasing and wet-erasing.

The visible change of the dye 4 comprises changing to transparent. In an alternative embodiment, the visible change of the dye comprises changing colour. In another alternative embodiment, the visible change of the dye comprises disappearing through evaporation, for example.

The visible change of the dye 4 is permanent such that an appearance of the dye 4 does not change back to original when the temperature of the dye 4 decreases later to a temperature below the predetermined indication temperature. In another embodiment, the visible change of the thermochromatic dye is reversible such that an appearance of the dye changes back to original as a response to the temperature of the dye decreasing subsequently to a predetermined resetting temperature. The predetermined resetting temperature is lower than the predetermined indication temperature.

The marking of each of the electrical connections has been carried out by forming a line 8 with the dye 4 such that the line 8 extends from the rotatable connection member 6 to the corresponding first element 11 in order to indicate a situation in which a rotational position of the rotatable connection member 6 subsequently changes. Consequently, the markings are adapted to indicate problems with the electrical connections in two ways such that a visible change of the thermochromatic dye indicates excessive temperature and a change of a rotational position of a segment of the line 8 provided on the rotatable connection member 6 indicates loosening of the electrical connection.

Especially in embodiments in which the type of the connection arrangement is other than a threaded arrangement, it is possible to select a form of the marking on the electrical connection quite freely. Examples of usable forms for the marking comprise a cross, a circle, a square and a triangle.

In an embodiment, the method comprises an inspection step for inspecting whether the marking indicates problems relating to the electrical connection. The inspection step comprises inspecting whether the dye has undergone the visible change. In case the connection arrangement of the electrical connection is a threaded arrangement, the inspection step further comprises inspecting whether a change in a rotational position of the rotatable connection member is greater than or equal to a predetermined limit value.

In a situation in which the inspection step reveals a problem relating to an electrical connection, the method comprises a further action step. In an embodiment, the further action step comprises decreasing power of the electrical assembly and/or repairing the electrical connection with the problem.

In the embodiment of Figure 1, the lines 8 have been made by a marker pen, wherein the dye 4 is a thermochromatic ink inside the container of the marker pen. In another embodiment, the dye is stored and applied in the same way as a correcting fluid, wherein the dye in a form of a thermochromatic paint is applied by a brush member provided with a cap as a grip, and the dye is stored in a container adapted to be sealed with the cap.

Figure 2 shows the electrical assembly of Figure 1 in a situation in which the line 8 on one of the electrical connections, namely the outermost electrical connection on the right, has disappeared therefore indicating that said electrical connection has heated to the predetermined indication temperature. Figure 2 also shows that the outermost electrical connection on the right has loosened, so even if the temperature of the electrical connection would not have reached the predetermined indication temperature, the marking would indicate a problem in the electrical connection by means of a change of a rotational position of a segment of the line 8 provided on the rotatable connection member 6 of the electrical connection.

The nominal current of each of the electrical connections shown in Fig-ure 1 is greater than or equal to 5 A. In an embodiment, the electrical assembly comprises an electrical apparatus, wherein the nominal voltage of the electrical apparatus is greater than or equal to 20 V.

In an embodiment, the electrical assembly comprises an electrical apparatus such that one of the first element and the second element of the electrical connection is an input or output terminal of the electrical apparatus, and the other of the first element and the second element is a cable terminal of an input or output cable.

It will be obvious to a person skilled in the art that the inventive concept can be implemented in various ways. The invention and its embodiments are not limited to the examples described above but may vary within the scope of the claims.

## Claims

1. A method in connection with an electrical assembly, wherein the electrical assembly comprises an electrical connection having a first element (11), a second element (12) and connection arrangement (2) for keeping the first element (11) and the second element (12) in electrically conducting connection with each other, wherein the method comprises marking the electrical connection with a dye (4), **characterized in that** the dye (4) is a thermochromatic dye adapted to undergo a visible change at a predetermined indication temperature.

2. The method according to claim 1, wherein the predetermined indication temperature is in a range of +70 °C to +155 °C.

3. The method according to claim 1 or 2, wherein the dye (4) is a permanent type of dye.

4. The method according to claim 1, 2 or 3, wherein the visible change is permanent.

5. The method according to any one of the preceding claims, wherein the visible change comprises turning transparent.

6. The method according to any one of the preceding claims, wherein the dye (4) is a thermochromatic ink.

7. The method according to claim 6, wherein the marking is made by a marker pen.

8. The method according to any one of the preceding claims, wherein the connection arrangement (2) is a threaded arrangement, crimped arrangement, bayonet arrangement, welded arrangement or soldered arrangement.

9. The method according to claim 8, wherein the connection arrangement (2) is a threaded arrangement such that the connection arrangement (2) comprises a rotatable connection member (6), and wherein the marking step comprises forming a line (8) with the dye (4) such that the line (8) extends from the rotatable connection member (6) to a stationary portion of the electrical assembly in order to indicate a situation in which a rotational position of the rotatable connection member (6) subsequently changes.

10. The method according to claim 9, wherein the rotatable connection member (6) is a bolt, screw or nut.

11. The method according to any one of the preceding claims, wherein the method comprises an inspection step for inspecting whether the marking indicates a problem relating to the electrical connection, wherein the inspection step comprises inspecting whether the dye (4) has undergone the visible change.

12. The method according to claim 11, wherein the connection arrangement (2) is a threaded arrangement, the inspection step comprises inspecting whether a change in a rotational position of the rotatable connection member (6) is greater than or equal to a predetermined limit value.

13. The method according to claim 11 or 12, wherein in a situation in which the inspection step reveals a problem relating to the electrical connection, the method comprises a further action step comprising decreasing power of the electrical assembly and/or repairing the electrical connection with the problem.

14. The method according to any one of the preceding claims, wherein the nominal current of the electrical connection is greater than 5 A.
